# EUROPEAN PATENT APPLICATION

(11) **EP 4 572 092 A1**
(43) Date of publication of application: **18.06.2025**
(21) Application number: 23216499.6
(22) Date of filing: 14.12.2023
(51) Int. Cl.: H02K 1/14

(54) **STATOR FOR AN ELECTRIC MOTOR**

(71) Applicant: BSH Hausgeräte GmbH, 81739 München (DE)
(72) Inventor: Vapnár, Jozef, 07101 Michalovce (SK); Bocinec, Matus, 07101 Michalovce (SK); Stavrovsky, Vladimir, 07101 Michalovce (SK)

(57) **Abstract**

The invention relates to a stator (1) for an electric motor comprising first stator segments (2) of a first half (3) of the stator (1), which are arranged fixedly relative to one another in a first cage (4), second stator segments of a second half (6) of the stator (1), which are arranged fixedly relative to one another in a second cage (7), and a coil (8) which comprises a coil insulation (9) on which the coil (8) is wound, the first stator segments (2) of the first half (3) being connected to the second stator segments (5) of the second half (6) by at least one connecting means (12, 13) in a connecting region (20).

## Description

### Technical area

The present invention relates to a stator for an electric motor, in particular for a household appliance.

### Prior art

Several electric motors with stators are known from the prior art.

EP2453556B1 discloses an electric motor having a stator, a rotor and a can arranged between the stator and the rotor, the electric motor being designed as a 2-phase or 3-phase motor, the stator having a plurality of stator pole pairs which are each formed by two adjacent stator poles, which are designed such that they generate oppositely polarized magnetic fields, the stator poles are designed as pole bars with coils arranged thereon, the coils of two adjacent stator poles forming a stator pole pair being electrically connected in series, and the rotor has a plurality of magnetic rotor poles distributed over the circumference and is designed in such a way that a magnetic flux is possible between two adjacent rotor poles, characterized in that the coils of the stator poles of two diametrically opposite stator pole pairs are electrically connected in series, so that two diametrically opposite stator pole pairs are energized simultaneously and in that the coils are interconnected by a printed circuit board arranged on the stator.

One disadvantage of this electric motor is that the stator of the electric motor is constructed in a complex manner and is therefore expensive to manufacture.

The problem of the present invention is therefore to provide a stator for an electric motor which is constructed in a simple manner and permits more effective manufacture.

### Description of the invention

The invention relates to a stator for an electric motor comprising first stator segments of a first half of the stator which are fixedly arranged relative to one another in a first cage, second stator segments of a second half of the stator which are fixedly arranged relative to one another in a second cage, and a coil comprising a coil insulation on which the coil is wound, wherein the first stator segments of the first half are connected to the second stator segments of the second half by at least one connecting means in a connecting region.

The stator can be suitable for any electric motor, such as a DC motor, a three-phase motor, a brush motor, a polyphase motor, a stepper motor and/or a brushless motor.

Advantageously, the stator can be suitable for a linear electric motor for a compressor, for example for a refrigerator. A compressor with a linear electric motor is a gas compressor in which the piston moves along a linear path to minimize friction and reduce energy loss during motion conversion. This technology is successfully used in cryogenic applications that can be oil-free. The oil-free compressor with an electric motor enables the use of compact heat exchangers. A linear electric motor or linear synchronous motor (LSM) is an electric drive machine. A linear electric motor moves the object to be driven along a straight or curved path (translational motion).

One advantage of this stator is that the stator is constructed in a compact manner and is made up of several prefabricated stator segments that are inserted into a prefabricated cage provided for this purpose. This significantly simplifies the production of the stator and allows it to be automated.

A further advantage of this stator is that the positioning of the prefabricated stator segments within the cages provided for this purpose and the subsequent connection of the two halves of the stator enable the coil to be positioned precisely between the two halves relative to the stator segments.

Advantageously, the connecting means for connecting the first stator segments to the second stator segments can be a mechanical step-like connection, whereby in each case a first step-like connection of one of the first stator segments can be connected to a corresponding second step-like connection of one of the second stator segments by form fit.

By using the step-like connection, each of the first stator segments is connected to the corresponding second stator segment by form fit. This enables predefined positioning of the first stator segments and the second stator segments relative to the coil.

Advantageously, the first stator segments can be connected to the second stator segments by means of the connecting means and the stator can additionally have a mechanical click connection, wherein the click connection can have a first connecting part of the click connection, which can be firmly connected to the first stator segments and/or to the first cage, and a second connecting part of the click connection, which can be firmly connected to the second stator segments and/or to the second cage, wherein the click connection connects the first stator segments in the first cage to the second stator segments in the second cage by form fit.

By using the click connection, the two halves are firmly connected to each other, namely the first stator segments in the first cage are connected to the second stator segments in the second cage.

In the connection region between the first stator segments and the second stator segments, the connection can also be reinforced by joining methods such as gluing, welding or soldering.

Advantageously, the individual first stator segments and the individual second stator segments can be arranged at a fixed radial distance from one another, wherein the radial distance between the individual stator segments corresponds to at least 50% of a width of one of the stator segments at the outermost circumference of the cylindrically arranged stator segments.

As a result, the stator segments can be arranged in contact with each other on an inner side directed towards an axis of symmetry of the stator, whereby the stator segments are arranged at a defined radial distance from each other on an outer side directed away from the axis of symmetry of the stator.

Advantageously, the first stator segments and the second stator segments may be U-shaped and/or the step-like connection may be arranged on an outer side or an inner side relative to an axis of symmetry of the stator of each of the stator segments and/or a connecting element may be arranged on each stator segment for mechanical connection by form fit with the corresponding mechanical connection on the first cage or on the second cage.

The U-shaped stator segments achieve the desired electromagnetic properties, whereby the U-shaped stator segments can also serve as a holder for the inserted coil. The connecting element on each of the stator segments enables a secure connection to the cage in a predefined position.

Advantageously, the first stator segments in the first cage and the second stator segments in the second cage can serve as a support for the coil, so that the coil is held between the two halves of the stator by the first stator segments and second stator segments as a support and is fixed in a fixed position relative to the first stator segments and the second stator segments.

As a result, the stator segments serve as a support or holder for the coil, which is inserted between the first stator segments and the second steel segments, so that a predefined positioning of the coil relative to the stator segments is ensured. Furthermore, the arrangement of an additional holding device for the coil is not necessary.

Advantageously, the first stator segments and the second stator segments can be produced by stamping.

This enables fully automated production of the stator segments with a high degree of precision.

Advantageously, the first cage and the second cage can be made of plastic.

Due to the flexible properties of the plastic, the cage made of plastic allows the stator segments to be easily inserted into the cage, for example by means of a connecting element, as the connecting element can be designed in the form of a click connection.

A further object of the invention is a method of manufacturing the stator described above, wherein the first stator segments of the first half are connected to the second stator segments of the second half by the connecting means in the connecting region, such as a step-like connection on an outer side of the stator segments, wherein the coil is fixedly arranged between the first stator segments and the second stator segments.

This process enables the stator described above to be manufactured quickly and easily. The two prefabricated halves of the stator simply accommodate the coil and are joined together to produce the stator described above.

One advantage of this process is that possible manufacturing errors and positioning errors are prevented.

Advantageously, by means of a mechanical click connection comprising a first connecting part of the click connection, which can be firmly connected to the first stator segments and/or to the first cage, and a second connecting part of the click connection, which can be firmly connected to the second stator segments and/or to the second cage, the first stator segments in the first cage can be connected to the second stator segments in the second cage by form fit.

The click connection mechanically connects the two halves of the stator in a simple way.

### Brief description of the drawings

The invention is explained with reference to the following
drawings:
- Fig. 1: a schematic representation of a stator;
- Fig. 2: a schematic representation of the stator from Fig. 1 in an assembled state;
- Fig. 3: a sectional view of the assembled stator;
- Fig. 4: a top view of the assembled stator;
- Fig. 5: a schematic representation in three-dimensional view and in a sectional view of the first and second stator segments.

### Embodiments

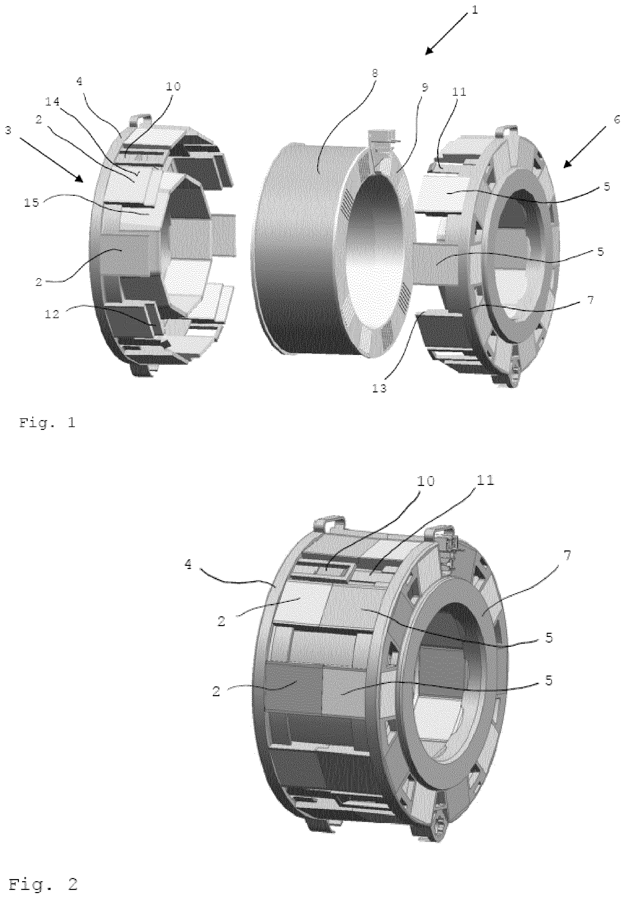

Fig. 1 shows a schematic representation of a stator 1 for an electric motor comprising first stator segments 2 of a first half 3 of the stator 1, which are fixedly arranged relative to one another in a first cage 4, second stator segments 5 of a second half 6 of the stator 1, which are fixedly arranged relative to one another in a second cage 7, and a coil 8, which comprises a coil insulation 9, on which the coil 8 is wound. The first stator segments 2 of the first half 3 are connected to the second stator segments 5 of the second half 6 by a connecting means 10 in the form of a click connection comprising a first connecting part 10 and a second connecting part 11, wherein the first connecting part 10 is connected to the first cage 4 and the second connecting part 11 is connected to the second cage 7. Each of the first stator segments 2 has a first mechanical step-like connection 12, which is connected to a corresponding second mechanical step-like connection 13 of the corresponding second stator segment 5 by form fit. The step-like connections 12, 13 are arranged on an outer side 14 of the stator segments 2, 5 relative to an axis of symmetry of the stator 1. Inner sides 15 of the stator segments 2, 5 relative to the axis of symmetry of the stator 1 are arranged cylindrically next to each other in contact with each other. The stator segments 2, 5 with the outer sides 14 and the inner sides 15 serve as holders for the coil 8, which is positioned at a fixed position relative to the stator segments 2, 5 after connection.

Fig. 2 shows a schematic representation of the stator 1 of Fig. 1 in an assembled state, wherein the first stator segments 2 are connected to the second stator segments 5 and the click connection comprising the first connecting part 10 and the second connecting part 11 holds the two halves of the stator 1 together.

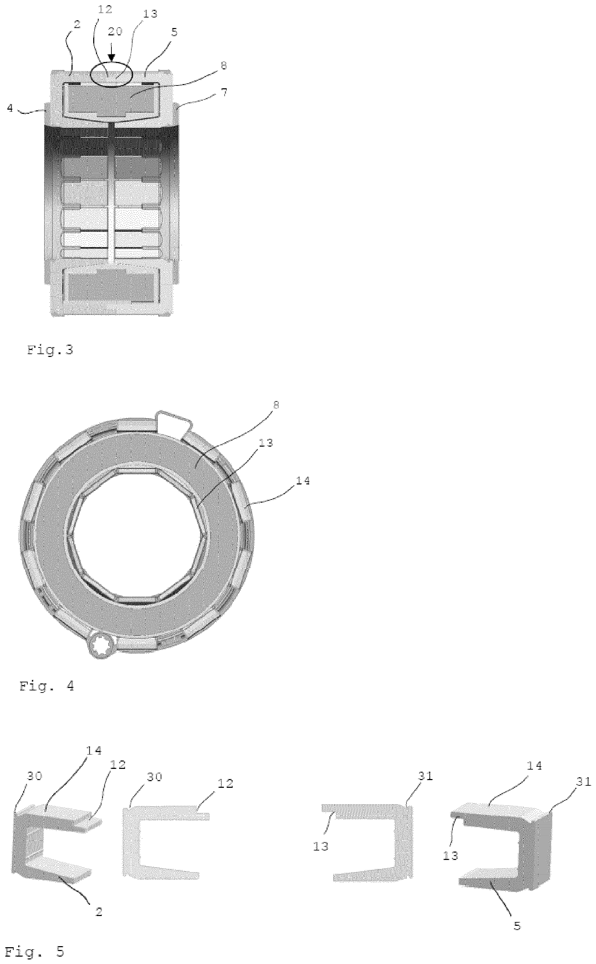

Fig. 3 shows a sectional view of the assembled stator 1 of Fig. 2, wherein the first step-like connection 12 of the first stator segment 2 is connected to the corresponding second step-like connection 13 of the second stator segment 5 in a connection region 20. The first stator segments 2 are mechanically connected to the first cage 4 and the second stator segments 5 are mechanically connected to the second cage 7 using connecting elements. The coil 8 is arranged at a fixed position between the stator segments 2, 5.

Fig. 4 shows a top view of the assembled stator 1 from Fig. 2, with the coil 8 arranged between the outer side 14 and the inner side 15 of the stator segments 2, 5.

Fig. 5 shows a schematic representation in three-dimensional form and in a sectional view of the first stator segment 2 with the first step-like connection 12 on the outer side 14 and a first connecting element 30 for connecting the respective stator segment 2 to the first cage 4. On the right-hand side of the representation, the second stator segment 5 is shown in three-dimensional form and in a sectional view with the second step-like connection 13 on the outer side 14 and with a second connecting element 31 for connecting the respective stator segment 5 to the second cage 7.

### List of reference symbols

- 1: stator
- 2: first stator segments
- 3: first half
- 4: first cage
- 5: second stator segments
- 6: second half
- 7: second cage
- 8: coil
- 9: coil insulation
- 10: first connecting part
- 11: second connecting part
- 12: first mechanical step-like connection
- 13: second mechanical step-like connection
- 14: outer side
- 15: inner side
- 20: connecting region
- 30: first connecting element
- 31: second connecting element

## Claims

1. Stator (1) for an electric motor, comprising first stator segments (2) of a first half (3) of the stator (1), which are arranged fixedly relative to one another in a first cage (4), second stator segments of a second half (6) of the stator (1), which are arranged fixedly relative to one another in a second cage (7), and a coil (8) which comprises a coil insulation (9) on which the coil (8) is wound, the first stator segments (2) of the first half (3) being connected to the second stator segments (5) of the second half (6) by at least one connecting means (12, 13) in a connecting region (20).

2. Stator (1) according to claim 1, wherein the connecting means for connecting the first stator segments (2) to the second stator segments (5) is a mechanical step-like connection, wherein in each case a first step-like connection (12) of one of the first stator segments (2) is connected to a corresponding second step-like connection (13) of one of the second stator segments (5) by form fit.

3. Stator (1) according to claim 1 or 2, wherein the first stator segments (2) are connected to the second stator segments (5) by means of the connecting means (12, 13) and the stator (1) additionally has a mechanical click connection comprising a first connecting part (10) of the click connection, which is firmly connected to the first stator segments (2) and/or to the first cage (4), and a second connecting part (11) of the click connection, which is firmly connected to the second stator segments (5) and/or to the second cage (7), wherein the click connection (10, 11) connects the first stator segments (2) in the first cage (4) to the second stator segments (5) in the second cage (7) by form fit.

4. The stator (1) according to any one of claims 1-3, wherein the individual first stator segments (2) and the individual second stator segments (5) are arranged at a fixed radial distance from each other, wherein the radial distance between the individual stator segments (2, 5) corresponds to at least 50% of a width of one of the stator segments (2, 5) at the outermost circumference (14) of the cylindrically arranged stator segments (2, 5).

5. The stator (1) according to any one of claims 1-4, wherein the first stator segments (2) and the second stator segments (5) are U-shaped and/or the step-like connection is arranged on an outer side or an inner side relative to an axis of symmetry of the stator (1) of each of the stator segments and/or a connecting element is arranged on each stator segment for mechanical connection by form fit with the corresponding mechanical connection on the first cage (4) or on the second cage (7).

6. The stator (1) according to any one of claims 1-5, wherein the first stator segments (2) in the first cage (4) and the second stator segments (5) in the second cage (7) serve as support for the coil (8), so that the coil (8) is held between the two halves of the stator (1) by the first stator segments (2) and second stator segments as support and is fixedly arranged in a fixed position relative to the first stator segments and the second stator segments (5).

7. The stator (1) according to any one of claims 1-6, wherein the first stator segments (2) and the second stator segments (5) are produced by stamping.

8. The stator (1) according to any one of claims 1-7, wherein the first cage (4) and the second cage (7) are made of plastic.

9. Method for manufacturing the stator (1) according to any one of claims 1-8, wherein the first stator segments (2) of the first half (3) are connected to the second stator segments (5) of the second half (6) by the connecting means (12, 13) in the connecting region (20), such as a step-like connection (12, 13) at an outer side (14) of the stator segments (2), wherein the coil (8) is fixedly arranged between the first stator segments (2) and the second stator segments (5).

10. Method according to claim 9, wherein by means of a mechanical click connection comprising a first connecting part (10) of the click connection, which is firmly connected to the first stator segments (2) and/or to the first cage (4), and a second connecting part (11) of the click connection, which is firmly connected to the second stator segments (5) and/or to the second cage (7), the first stator segments (2) in the first cage (4) are connected to the second stator segments (5) in the second cage (7) by form fit.
